# DEMANDE DE BREVET EUROPEEN

(11) **EP 3 002 251 A1**
(43) Date de publication de la demande: **06.04.2016**
(21) Numéro de dépôt: 14187348.9
(22) Date de dépôt: 01.10.2014
(51) Int. Cl.: C01B 13/11

(54) **Appareil pour fournir de l'ozone par effet corona**

(71) Demandeur: OZONE TECHNOLOGIES LTD, St. Julians STJ 3203 (MT)
(72) Inventeur: Klopfenstein, Denis, 1110 Morges (CH); Walters, Mortimer, 700 Escaldes-Engordany (AD)
(74) Mandataire: Schneiter, Sorin

(57) **Abrégé**

L'appareil pour fournir de l'ozone par effet corona comporte une cellule amovible (42 ; 142 ; 242) qui comprend le générateur d'ozone (3) et une mémoire non-volatile (5) contenant des données de calibration propres au générateur d'ozone. La cellule amovible est agencée pour pouvoir être séparée du reste de l'appareil et pour pouvoir être remplacée facilement.

## Description

### DOMAINE DE L'INVENTION

La présente invention concerne un appareil pour fournir de l'ozone par effet corona, l'appareil comprenant une alimentation comportant un transformateur haute tension séparant un étage « haute tension » d'un étage « basse tension » de l'appareil, le transformateur comprenant un enroulement primaire et un enroulement secondaire, l'étage « basse tension » étant connecté à l'enroulement primaire et étant agencé pour alimenter ce dernier avec un courant alternatif ou un courant unidirectionnel pulsé, l'appareil comportant encore un circuit électronique de commande pour commander une tension d'alimentation fournie par l'étage « basse tension », l'étage « haute tension » comportant un générateur d'ozone à effet corona agencé pour être relié à l'enroulement secondaire, le générateur d'ozone comprenant une paire d'électrodes corona et un diélectrique solide, les électrodes corona étant séparées l'une de l'autre par le diélectrique solide.

### ART ANTERIEUR

L'ozone (O₃) est utilisé depuis de nombreuses années comme désinfectant. Il trouve notamment son utilité pour désinfecter les plaies, la lessive, l'air, les aliments, les locaux et plus généralement tout objet susceptible d'être contaminé par des microorganismes.

Un procédé connu pour produire de l'ozone est l'effet corona. L'effet corona consiste en une ionisation localisée de l'air ambiant provoquée par un champ électrique intense à proximité d'un conducteur à haute tension. L'ionisation rend l'air conducteur. Ainsi, en présence de deux électrodes entre lesquelles existe une tension suffisante, l'effet corona est normalement associé à des décharges électriques. Ces décharges ont pour effet de briser un certain nombre de molécules d'oxygène contenues dans l'air, les monomères résultants peuvent ensuite se recombiner avec d'autres molécules d'oxygène diatomiques pour former des molécules d'oxygène triatomiques, c'est à dire de l'ozone. La tension électrique nécessaire pour alimenter un générateur d'ozone est généralement comprise entre 5 et 30 kV. Il s'agit le plus souvent d'une tension alternative dont la fréquence se situe entre 10 et 50 kHz.

On connaît des générateurs d'ozone comportant deux électrodes tubulaires concentriques séparées par un espace. L'électrode intérieure est constituée par un tube de verre avec un revêtement d'aluminium à l'intérieur. L'autre électrode est constituée par un tube en acier inoxydable qui entoure le tube en verre. Lorsqu'on établit une tension élevée entre les deux électrodes en reliant le revêtement d'aluminium à la haute tension et le tube en inox à la terre, et qu'on fait ensuite passer de l'air dans l'espace existant entre les deux tubes, on change une fraction de l'oxygène contenu dans l'air en ozone.

Les générateurs d'ozone ne sont pas toujours cylindriques, mais existent en de multiples versions. Le document de brevet US 6'284'204 notamment, décrit un générateur d'ozone comportant deux électrodes planes en forme de U. Une plaquette de céramique est prise en sandwich entre les deux électrodes. Les deux électrodes ne sont pas parfaitement superposées, mais décalées transversalement l'une par rapport à l'autre. Ainsi, la mise sous tension des électrodes provoque l'apparition d'un champ électrique intense à proximité de certains bords du U. En dirigeant un flux d'air sur les électrodes sous tension, parallèlement à celles-ci, on permet à l'ozone produit par l'effet corona d'être emporté tout en assurant le refroidissement des électrodes.

Bien qu'étant bon marché et efficace, les générateurs d'ozone comme ceux qui viennent d'être décrits présentent certains défauts. En effet, comme on l'a déjà dit, l'effet corona s'accompagne de décharges électriques, et l'ionisation des atomes d'oxygène n'est pas le seul effet de ces décharges. En effet, les décharges font également se détériorer les deux électrodes du générateur, ainsi que le matériau diélectrique qui sépare ces deux électrodes. Un problème associé à la détérioration progressive des constituants du générateur d'ozone est qu'elle influence la quantité d'ozone produite. Or, pour de nombreuses applications, il est important de bien maîtriser la quantité d'ozone utilisée. Une solution connue à ce problème est d'incorporer un système de mesure de la concentration d'ozone, par exemple par absorption UV, dans le dispositif producteur d'ozone. On comprendra en effet que la connaissance de la quantité d'ozone rend possible une régulation du générateur d'ozone.

Malheureusement, la mesure de la concentration d'ozone est assez difficile à mettre en oeuvre. Elle demande notamment de fréquents étalonnages en raison de la dérive des composants, et en particulier du vieillissement de la source UV. De plus, la mesure de l'ozone augmente considérablement le prix de l'appareil. Une autre solution connue, est de renvoyer l'appareil entier chez le fabricant pour le faire recalibrer. Cette dernière solution n'est bien évidemment pas satisfaisante non plus.

### BREF EXPOSE DE L'INVENTION

Un but de la présente invention est donc de remédier aux inconvénients qui viennent d'être décrits. La présente invention atteint ce but en fournissant un appareil pour fournir de l'ozone par effet corona conforme à la revendication 1 annexée.

Conformément à l'invention, le diélectrique solide et la paire d'électrodes corona constituant le générateur d'ozone sont placés dans une cellule amovible. De plus, de façon similaire à ce qui se fait pour certaines batteries de caméras vidéo ou de jouets, la cellule amovible présente deux électrodes de contact qui assurent la liaison électrique avec le reste de l'appareil de manière à permettre l'alimentation du générateur d'ozone lorsque la cellule amovible est fixée à l'appareil. Un avantage de l'invention est donc de rendre remplaçable la partie de l'appareil qui est soumise au vieillissement.

Selon un mode de réalisation avantageux de l'invention, le circuit électronique de commande de l'appareil est agencé pour tenir un décompte du temps total durant lequel la cellule amovible de l'appareil a été utilisée. Il est ainsi possible de prévoir que le circuit électronique, sur la base du temps d'utilisation, indique à l'utilisateur lorsque le moment est venu de remplacer la cellule amovible.

Comme on l'a déjà dit, pour de nombreuses applications, il est important de pouvoir commander avec précision la quantité d'ozone produite. Afin d'agir sur la quantité d'ozone produite par un générateur à effet corona, on peut par exemple faire varier l'amplitude de la tension sur le primaire du transformateur. Une autre possibilité est, par exemple, de faire varier le temps d'alimentation du transformateur. On parle alors d'un transformateur commandé par modulation de largeur d'impulsions. Toutefois, la quantité d'ozone produite par le générateur, lorsqu'il est alimenté par une tension d'une amplitude donnée, et/ou d'une largeur d'impulsions donnée, est très dépendante des éléments constituant le générateur. Cette quantité n'est donc absolument pas reproductible d'un générateur à l'autre. Chaque générateur doit donc être calibré individuellement. C'est la raison pour laquelle, conformément à l'invention, la cellule amovible comprend également une mémoire non-volatile qui contient des données de calibration propres au générateur d'ozone de la cellule. Grâce à ces données de calibration, le circuit électronique de commande de l'appareil peut ensuite adapter l'alimentation de l'enroulement primaire du transformateur de façon à produire la quantité d'ozone désirée. Les données de calibration sont de préférence enregistrées dans la mémoire non-volatile par le fabricant. On comprendra qu'un avantage lié à la présence d'une mémoire non-volatile contenant des données de calibration est de permettre de remplacer le générateur d'ozone sans devoir recalibrer l'appareil.

Selon d'autres modes de réalisation avantageux de l'invention, le critère définissant le moment où la cellule amovible doit être changée peut être basé sur la valeur d'un paramètre physique comme, par exemple, l'évolution de la consommation électrique du générateur d'ozone, l'évolution de la tension d'amorçage de l'effet corona, l'évolution de la capacité électrique de l'étage haute-tension de l'appareil, etc. A cet effet, une ou plusieurs de ces valeurs pourront être enregistrées dans la mémoire non-volatile lors de la calibration de la cellule amovible. Un avantage associé à ces derniers modes de réalisation est que le circuit électronique de commande de l'appareil peut ensuite utiliser ces données mémorisées comme valeurs de référence pour contrôler l'évolution du ou des paramètres physiques servant à déterminer le moment où la cellule amovible doit être remplacée.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une représentation schématique du circuit électrique d'un appareil pour fournir de l'ozone par effet corona conforme à un premier mode de réalisation de l'invention ;
- la figure 2 est une représentation schématique du circuit électrique d'un appareil pour fournir de l'ozone par effet corona conforme à un deuxième mode de réalisation de l'invention ;
- la figure 3 est une représentation schématique du circuit électrique d'un appareil pour fournir de l'ozone par effet corona conforme à un troisième mode de réalisation de l'invention.

### DESCRIPTION DETAILLEE DE MODES DE REALISATION

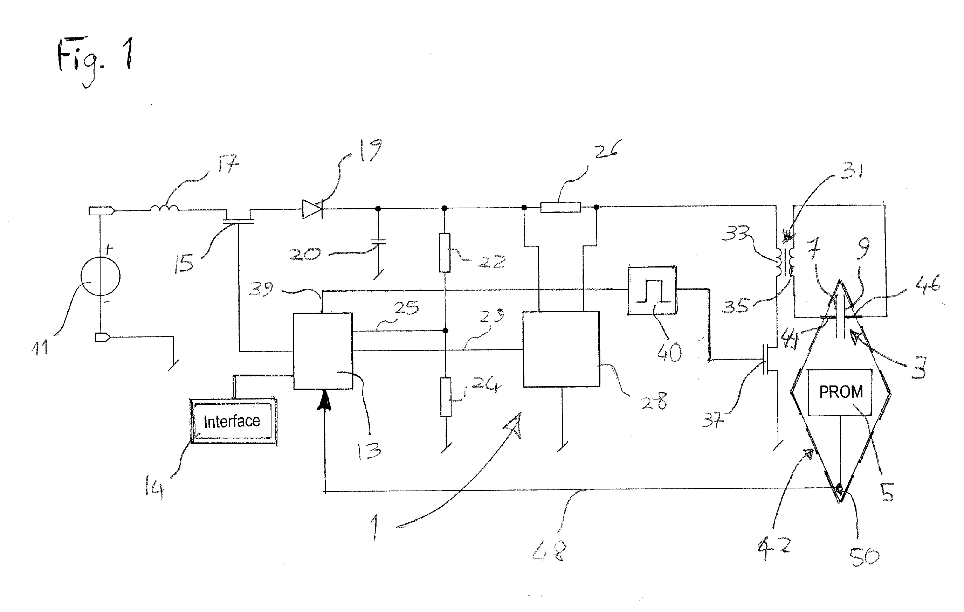

La figure 1 est une représentation schématique du circuit électrique d'un appareil pour fournir de l'ozone par effet corona conforme à un premier mode de réalisation de la présente invention. L'appareil pour fournir de l'ozone représenté est formé d'une alimentation (globalement référencée 1) d'un générateur d'ozone 3 et d'une mémoire ROM programmable 5. Le générateur d'ozone 3 peut être choisi parmi tous les modèles de générateur à effet corona connus de l'homme du métier, comme par exemple l'un de ceux décrits dans les documents de brevet US 5,124,132 ou US 6,284,204. De manière générale, un tel générateur comporte deux électrodes 7, 9 séparées l'une de l'autre par un diélectrique solide (non représenté), ainsi qu'un espace dégagé prévu pour permettre le passage d'air ou d'un autre gaz contenant de l'oxygène. Comme représenté sur la figure 1, les électrodes 7, 9 sont reliées à l'alimentation 1 qui est agencée pour leurs fournir une haute tension.

En partant de la gauche de la figure 1, on voit que l'alimentation 1 comprend tout d'abord une source de tension continue 11. Dans le cas où l'appareil pour fournir de l'ozone par effet corona est prévu pour être branché sur le secteur, la source de tension 11 pourra être associée à un redresseur (non représenté) pour transformer le courant alternatif du secteur en courant continu. Le reste du premier étage de l'alimentation 1 forme, avec la source de tension 11, une alimentation programmable commandée par modulation de largeur d'impulsion (PWM). Cette alimentation programmable comprend un microcontrôleur 13 associé à un interface de commande 14, un transistor de puissance 15, une bobine d'induction 17, une diode à commutation rapide 19 et un condensateur 20. De façon connue en soi, le microcontrôleur 13 peut commander la tension continue en sortie de l'alimentation programmable en modulant la largeur des impulsions de commande qu'il fournit à la base du transistor de puissance 15. La technique de modulation de largeur d'impulsion constitue une manière simple et peu coûteuse de commander la tension d'alimentation. Toutefois, on comprendra que tout autre manière connue de l'homme du métier pour commander la tension d'alimentation pourrait être utilisée.

L'alimentation 1 comprend encore des moyens pour mesurer le courant et l'amplitude de la tension en sortie de l'étage basse tension. Les moyens pour mesurer l'amplitude de la tension sont constitués par un diviseur de tension formé par deux résistances 22 et 24 de valeurs élevées qui sont reliées en série. La figure 1 montre encore une connexion 25 qui relie un noeud du circuit situé entre les deux résistances 22 et 24 à une entrée du microcontrôleur 13. La connexion 25 permet de fournir au microcontrôleur 13 une tension réduite représentative de la tension aux bornes du condensateur 20. Quant aux moyens pour mesurer le courant, ils sont constitués par une petite résistance 26 associée à un circuit intégré *ad hoc* 28. Le circuit intégré 28 peut être d'un modèle connu. Il est adapté pour fournir une tension représentative d'une différence de potentiel entre ses deux entrées. Comme le montre la figure 1, les entrées du circuit intégré 28 sont respectivement reliées aux deux bornes de la résistance 26. Ainsi, la différence de potentiel entre les deux entrées est proportionnelle à l'intensité du courant qui traverse la résistance. La sortie du circuit intégré 28 est reliée au microcontrôleur 13 par une connexion 29. Cette connexion a pour fonction de fournir au microcontrôleur 13 une tension représentative de l'intensité du courant en sortie de l'alimentation basse tension programmable.

L'alimentation 1 comprend encore un transformateur haute tension 31 comportant un enroulement primaire 33 et un enroulement secondaire 35. Comme on peut le voir sur la figure 1, l'enroulement primaire 33 est connecté en sortie de l'étage basse tension en série avec un transistor de puissance 37. Un générateur de fréquence programmable 40 est encore prévu pour commander le transistor de puissance 37 pour le faire commuter à une fréquence élevée (située de préférence entre 20 et 40 KHz). On peut voir encore sur la figure 1 que le générateur de fréquence 40 est relié au microcontrôleur 13 par un ligne 39. Ainsi, le courant en sortie de l'alimentation basse tension programmable est découpé de manière à obtenir un courant quasi-rectangulaire, dont la fréquence est déterminée par le microcontrôleur 13. Ce courant quasi-rectangulaire permet d'exciter le primaire du transformateur haute tension 31.

En se référant encore à la figure 1, on peut voir que les électrodes 7, 9 du dispositif corona 3 sont reliées aux deux bornes de l'enroulement secondaire 35 du transformateur 31. Lorsque le primaire du transformateur 31 est alimenté par les impulsions quasi-rectangulaires découpées par le transistor de puissance 37, il fournit en sortie une haute tension dont l'amplitude est de préférence de l'ordre de la dizaine de kilovolts. On comprendra qu'en l'absence de phénomènes de saturations au niveau du transformateur 31, l'amplitude de la haute tension entre les électrodes 7 et 9 du générateur d'ozone est une fonction monotone croissante de la tension mesurée par les moyens 22, 24, 25 en sortie de l'alimentation basse tension.

L'alimentation 1 qui vient d'être décrite permet donc au microcontrôleur 13 de commander l'amplitude de la haute-tension fournie au générateur d'ozone 3. On comprendra en outre que le microcontrôleur 13 peut modifier l'amplitude de la tension alternative entre les électrodes 7, 9 du générateur d'ozone de deux manières différentes. La première manière est de commander l'amplitude de la tension fournie à l'enroulement primaire par l'étage « basse tension » en modulant la largeur des impulsions de commande qu'il fournit à la base du transistor de puissance 15. La deuxième manière est de commander la durée d'alimentation du transformateur, ou autrement dit, de commander la largeur des impulsions du courant unidirectionnel pulsé à travers l'enroulement primaire 33, en modulant la largeur des impulsions de commande fournies par le générateur de fréquence programmable 40 sur la base du transistor de puissance 37.

Conformément à l'invention, l'appareil pour fournir de l'ozone par effet corona qui est représenté dans la figure 1 comporte une cellule amovible référencée globalement 42. Comme on peut le voir sur la figure, la cellule amovible 42 comprend le générateur d'ozone 3 et la mémoire ROM programmable 5. La mémoire ROM, qui est de préférence une mémoire effaçable électriquement (EEPROM), contient des données de calibration propres au générateur d'ozone 3. Lorsque la cellule 42 est en place sur l'appareil, le microcontrôleur 13 peut lire les données contenues dans la mémoire ROM par l'intermédiaire de la ligne 48. Le microcontrôleur est agencé pour utiliser ensuite ces données de calibration pour adapter l'alimentation de l'enroulement primaire du transformateur de façon à produire la quantité d'ozone désirée.

La cellule 42 est agencée pour pouvoir être aisément mise en place ou détachée de l'appareil par un utilisateur sans qualifications techniques particulières. A cet effet, à l'instar de ce qui existe pour les batteries rechargeables, la cellule amovible 42 présente deux électrodes de contact déconnectables (référencées 44 et 46) qui relient électriquement le générateur d'ozone 3 à l'alimentation 1 dès que la cellule amovible est mise en place sur l'appareil. En se référant encore à la figure 1, on peut voir que l'appareil comprend encore un connecteur 50 agencé pour relier la mémoire 5 à la ligne 48 lorsque la cellule amovible est mise en place sur l'appareil.

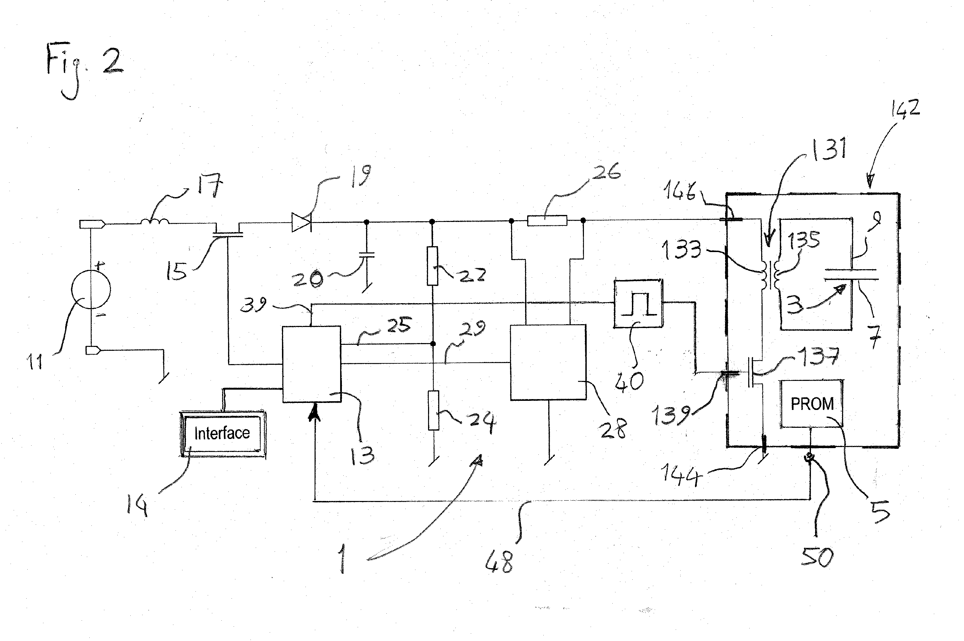

La figure 2 est une représentation schématique du circuit électrique d'un appareil pour fournir de l'ozone par effet corona conforme à un deuxième mode de réalisation de la présente invention. L'appareil pour fournir de l'ozone représenté comporte les mêmes éléments que l'appareil pour fournir de l'ozone de la figure 1 et son principe de fonctionnement est le même. Toutefois, la répartition de des différents éléments est légèrement différente. Les éléments du schéma de la figure 2 qui sont identiques à un élément correspondant du schéma de la figure 1 sont désignés par le même numéro de référence.

La caractéristique essentielle qui distingue le deuxième mode de réalisation illustré dans la figure 2 de celui illustré dans la figure 1 est que le transformateur haute tension 131 et le transistor de puissance 137 font partie de la cellule amovible 142. Comme dans le premier mode de réalisation, la cellule 142 est agencée pour pouvoir être aisément mise en place ou détachée de l'appareil par un utilisateur sans qualifications techniques particulières. A cet effet, elle présente deux électrodes de contact déconnectables (référencées 144 et 146) entre lesquelles sont connectés en série l'enroulement primaire 133 du transformateur et le transistor de puissance 137. On comprendra donc que, dès que la cellule amovible 142 est mise en place sur l'appareil, les électrodes de contact 144 et 146 relient le transformateur 131 à l'alimentation 1. De façon semblable à ce qui était le cas avec le premier mode de réalisation, le transistor de puissance 137 est agencé pour être commandé par le générateur de fréquence programmable 40. En se référant encore à la figure 2, on peut voir que le générateur de fréquence 40 ne fait pas partie de la cellule amovible 142. C'est la raison pour laquelle l'appareil pour fournir de l'ozone comprend encore un connecteur 139 agencé pour relier la base du transistor 137 au générateur de fréquence 40 lorsque la cellule amovible est mise en place sur l'appareil.

Nous avons dit plus haut que la quantité d'ozone produite par l'appareil est très dépendante des éléments constituant le générateur 3. En fait, si les éléments constituant le générateur d'ozone sont bien les principaux responsables de la non-reproductibilité de la quantité d'ozone produite, d'autres éléments qui interagissent avec le générateur d'ozone 3 peuvent également contribuer à faire varier la quantité d'ozone produite. Ces éléments sont en particulier le transformateur haute-tension 131 et le transistor 137. Un avantage du deuxième mode de réalisation qui vient d'être décrit est qu'il permet d'enregistrer dans la mémoire non-volatile 5 des données de calibration qui n'ont pas uniquement trait au générateur d'ozone 3, mais qui ont trait à l'entier du circuit haute-tension de l'appareil. On comprendra que le deuxième mode de réalisation donne la possibilité de remplacer l'entier du circuit haute-tension de l'appareil, y-compris le transformateur 131, sans devoir recalibrer l'appareil.

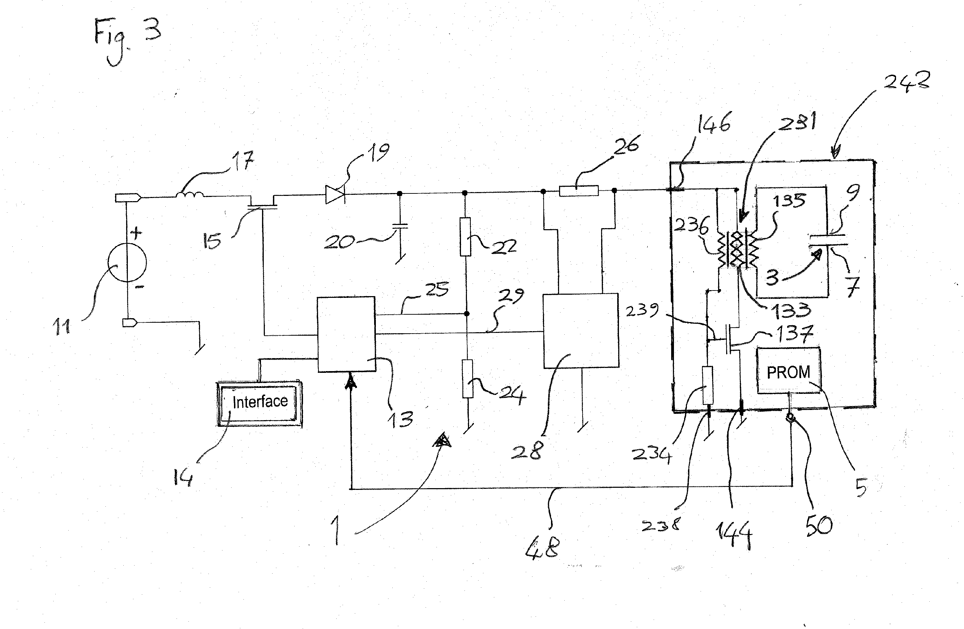

La figure 3 est une représentation schématique du circuit électrique d'un appareil pour fournir de l'ozone par effet corona conforme à un troisième mode de réalisation de la présente invention. L'appareil pour fournir de l'ozone représenté comporte la plupart des mêmes éléments que les appareils des figures 1 et 2. Toutefois, son principe de fonctionnement diffère de celui des modes de réalisation précédents en ce que le circuit d'alimentation du générateur d'ozone 3 est un circuit auto-résonnant. Les éléments du schéma de la figure 3 qui sont identiques à un élément correspondant d'un des schémas de la figure 1 ou 2 sont désignés par le même numéro de référence.

En se référant à la figure 3, on peut voir que le transformateur haute tension 231 et le transistor de puissance 137 font partie de la cellule amovible 242. De ce point de vue, le troisième mode de réalisation est semblable au deuxième. Comme on peut le voir sur la figure, la caractéristique essentielle qui distingue le troisième mode de réalisation du deuxième est que le transformateur 231 comporte un troisième enroulement référencé 236. L'enroulement 236 est connecté à l'alimentation basse tension en série avec une résistance de valeur élevée référencée 234. On peut voir encore qu'une connexion 239 relie un noeud du circuit situé entre l'enroulement 236 et la résistance 234 à la base du transistor de puissance 137. L'homme du métier aura compris que les éléments du troisième mode de réalisation qui viennent d'être décrits sont agencés pour rendre le circuit auto-résonnant. C'est la raison pour laquelle le générateur de fréquence 40 que comportaient les deux premiers modes de réalisation n'existe pas sur la figure 3.

Comme la cellule 142 du deuxième mode de réalisation, la cellule amovible 242 présente deux électrodes de contact 144 et 146 entre lesquelles sont connectés en série l'enroulement primaire 133 du transformateur 231 et le transistor de puissance 137. Les électrodes de contact permettent de mettre en place ou de détacher facilement la cellule amovible 242. On peut voir encore que, dans l'exemple illustré, le troisième enroulement 236 et la résistance 234 sont connectés en série entre l'électrode de contact 146 et une troisième électrode de contact référencée 238.

Un inconvénient des circuits auto-résonnants comme celui qui vient d'être décrit est lié au fait que le temps de commutation du transistor de puissance 137 n'est pas bien reproductible d'un exemplaire à l'autre. Un avantage du troisième mode de réalisation qui vient d'être décrit est donc qu'il permet d'enregistrer dans la mémoire non-volatile 5 des données de calibration qui n'ont pas uniquement trait au générateur d'ozone 3, mais qui ont trait également à la propriété auto-résonnante du circuit, et en particulier au temps de commutation du transistor de puissance.

On comprendra en outre que diverses modifications et/ou améliorations évidentes pour un homme du métier peuvent être apportées aux modes de réalisation qui font l'objet de la présente description sans sortir du cadre de la présente invention définie par les revendications annexées. En particulier, selon une variante avantageuse, le microcontrôleur 13 est encore agencé pour tenir un décompte du temps total durant lequel la cellule amovible 42, 142 ou 242 a été utilisée. Sur le base du temps total décompté, on peut par exemple prévoir que, le moment venu, le microcontrôleur signale à l'utilisateur par l'intermédiaire de l'interface 14 que la cellule amovible doit être remplacée. Selon encore d'autres variantes avantageuses, le critère définissant le moment où la cellule amovible doit être changée pourrait être basé sur la valeur d'un paramètre physique, comme par exemple l'évolution de la consommation électrique du générateur d'ozone, l'évolution de la tension d'amorçage de l'effet corona, l'évolution de la capacité électrique de l'étage haute-tension de l'appareil, etc. Conformément à une telle variante, une ou plusieurs des valeurs en question pourraient être enregistrées dans la ROM 5 lors de la calibration de la cellule amovible. Le microcontrôleur 13 pourrait ensuite utiliser ces données mémorisées comme valeurs de référence pour contrôler l'évolution du ou des paramètres physiques servant à déterminer le moment où la cellule amovible doit être remplacée. Le microcontrôleur pourrait également utiliser les valeurs des paramètres physiques enregistrées dans la ROM programmable au moment de l'installation de la cellule 42, 142 ou 242 pour s'assurer que cette dernière n'a pas subi de dommage pendant le transport ou le stockage, ou alternativement, pour s'assurer que les fonctions de mesure de l'appareil fonctionnent.

D'autre part, on sait que de nombreux facteurs sont susceptibles d'influencer la production d'ozone par un générateur à effet corona. Il est connu notamment que la quantité d'ozone produite dépend de la température de l'air, de l'humidité ambiante, et de la pression dans la chambre de production d'ozone. Ainsi, pour réguler la production d'ozone, il est connu de programmer le circuit électronique de commande de l'appareil de manière à ce qu'il adapte ou corrige l'alimentation du primaire du transformateur en tenant compte des trois paramètres susmentionnés (température, humidité et pression). A cet égard, la présente invention offre deux possibilités. Selon une première variante possible, le circuit électronique de commande adapte l'alimentation du primaire du transformateur aux trois paramètres susmentionnés en appliquant un algorithme de correction étalonné une fois pour toute, et qui ne tient pas compte d'éventuelles différences de comportement entre deux exemplaires de la cellule amovible. On comprendra toutefois que selon une variante alternative, la mémoire non-volatile contient non seulement les données de calibration de base concernant la cellule amovible, mais contient également des secondes données de calibration qui sont également spécifiques à la cellule amovible, mais qui sont destinées à l'algorithme de correction servant à prendre en compte les trois paramètres susmentionnés.

## Revendications

1. Appareil pour fournir de l'ozone par effet corona comprenant :
une alimentation (1) comportant un transformateur haute tension (31 ; 131 ; 231) séparant un étage « haute tension » d'un étage « basse tension » de l'appareil, le transformateur comprenant un enroulement primaire (33 ; 133) et un enroulement secondaire (35 ; 135), l'étage «basse tension » étant connecté à l'enroulement primaire et étant agencé pour alimenter ce dernier avec un courant alternatif ou un courant unidirectionnel pulsé, l'appareil comportant encore un circuit électronique de commande (13, 14) pour commander une tension d'alimentation fournie par l'étage « basse tension », l'étage « haute tension » comportant un générateur d'ozone (3) à effet corona agencé pour être relié à l'enroulement secondaire (35 ; 135), le générateur d'ozone comprenant une paire d'électrodes corona (7, 9) et un diélectrique solide, les électrodes corona étant séparées l'une de l'autre par le diélectrique solide;
**caractérisé en ce que** l'appareil comporte une cellule amovible (42 ; 142 ; 242) qui comprend le générateur d'ozone (3), la cellule amovible étant équipée de deux électrodes de déconnectables 44, 46 ; 144, 146) agencées pour relier électriquement la cellule à amovible au reste de l'appareil de manière à permettre d'alimenter le générateur d'ozone, la cellule amovible étant agencée pour pouvoir être séparée du reste de l'appareil au niveau des électrodes de déconnectables ; et
**en ce que** la cellule amovible (42 ; 142 ; 242) comprend en outre une mémoire non-volatile (5) contenant des données de calibration qui concernent le générateur d'ozone (3) de la cellule amovible, l'appareil comprenant également un connecteur (50) agencé pour relier la mémoire non-volatile au circuit électronique de commande (13, 14) lorsque la cellule amovible est reliée au reste de l'appareil.

2. Appareil pour fournir de l'ozone par effet corona selon la revendication 1, dans lequel le circuit électronique de commande est agencé pour commander l'amplitude de la tension d'alimentation fournie à l'enroulement primaire par l'étage « basse tension ».

3. Appareil pour fournir de l'ozone par effet corona selon la revendication 1 ou 2, dans lequel l'étage « basse tension » est agencé pour alimenter l'enroulement primaire avec un courant unidirectionnel pulsé, le circuit électronique de commande étant agencé pour commander la largeur des impulsions fournies à l'enroulement primaire par l'étage « basse tension ».

4. Appareil pour fournir de l'ozone par effet corona selon l'une quelconque des revendications 1, 2 et 3, dans lequel le transformateur haute-tension (131 ; 231) et le transistor de puissance (137) font partie de la cellule amovible (142 ; 242), les données de calibration contenues dans la mémoire non-volatile 5 concernant non-seulement le générateur d'ozone (3), mais concernant l'ensemble fonctionnel constitué par les éléments qui font partie de la cellule amovible.

5. Appareil pour fournir de l'ozone par effet corona selon la revendication 4, dans lequel le transformateur haute-tension (231) comporte un troisième enroulement (236) relié à la base du transistor de puissance (137).

6. Appareil pour fournir de l'ozone par effet corona selon l'une quelconque des revendications précédentes, dans lequel les données de calibration contenues dans la mémoire non-volatile (5), et qui concernent le générateur d'ozone de la cellule amovible, tiennent comptes de l'effet sur la quantité d'ozone produite de la température de l'air, de l'humidité ambiante, et de la pression dans la chambre de production d'ozone.
